# FASCICULE DE BREVET EUROPEEN

(11) **EP 2 691 911 B1**
(45) Date de publication et mention de la délivrance du brevet: **14.02.2018**
(21) Numéro de dépôt: 12717399.5
(22) Date de dépôt: 28.03.2012
(51) Int. Cl.: G06K 7/00, G06K 7/10

(54) **PROCÉDÉ ET DISPOSITIF DE REPÉRAGE DE LA POSITION D'UN TRANSPONDEUR**
VERFAHREN UND VORRICHTUNG ZUR ERFASSUNG DER POSITION EINES TRANSPONDERS
METHOD AND DEVICE FOR LOGGING THE POSITION OF A TRANSPONDER

(30) Priorité: 30.03.2011 FR 1152618
(43) Date de publication de la demande: 05.02.2014
(73) Titulaire: Orange, 75015 Paris (FR)
(72) Inventeur: ASSADI, Houssem, F-14000 Caen (FR); LEVIONNAIS, Philippe, F-14000 Caen (FR)
(86) Numéro de dépôt international: PCT/FR2012/050652
(87) Numéro de publication internationale: WO 2012/131254

(56) Documents cités:
- EP-A1- 1 043 679
- WO-A1-97/34250
- WO-A1-2007/036967

## Description

### Domaine technique

L'invention se rapporte de manière générale aux télécommunications, et plus précisément aux communications sans contact utilisant des technologies radio à courte distance, notamment de type RFID (d'après l'anglais Radio Frequency IDentification). Elle s'applique plus particulièrement aux terminaux équipés de ressources physiques et logicielles incluant un microprocesseur et un module de communication en champ proche *(Near Field* - NF) générant un champ électromagnétique, aptes à communiquer avec des transpondeurs électromagnétiques, qu'ils soient passifs, actifs ou semi-actifs.

Les terminaux en question, désignés par la suite par l'expression "terminaux mobiles", sont des terminaux aptes à être déplacés.

### Etat de la technique

Les communications en champ proche, usuellement appelées NFC (*Near Field Communication*)*,* basées principalement sur la norme ISO (International Standard Organisation) 14443, utilisent des technologies sans-fil pour permettre un échange d'informations entre deux périphériques éloignés d'une courte distance, typiquement inférieure à dix centimètres. Les communications de ce type offrent de nombreuses applications dans les domaines du paiement ou du transport, par exemple.

Les communications en champ proche couvrent deux types d'applications :
- Le premier type met en oeuvre une émulation d'un module de communication en champ proche, présent sur un terminal mobile, pour sécuriser des transactions électroniques entre une application stockée sur le terminal ou le module et une borne externe de lecture qui émet des ondes électromagnétiques pour lire les données sur ce module.
- Le second type d'applications, auquel s'applique l'invention, se rapporte à la lecture de données sur des transpondeurs par le terminal mobile ; il s'agit du *tag reading* tel que défini par le *Forum NFC* (association industrielle chargée de promouvoir la mise en oeuvre et la normalisation de la technologie NFC). Une communication NFC est établie entre un maître, ici appelé terminal, et un esclave, ici appelé transpondeur. Par exemple, le terminal est un téléphone mobile et le transpondeur une étiquette associée à un service. De tels services permettent d'accéder à toutes sortes d'informations : applications de transport, de paiement, accès au réseau Internet, envoi d'un SMS ou d'un appel téléphonique, etc. L'établissement de la communication permettra à un utilisateur du terminal de lire les informations contenues dans l'étiquette en approchant son terminal mobile du support (affiche, catalogue, etc.) sur lequel elle est disposée.

Le transpondeur auquel s'applique l'invention, équipé d'un microprocesseur, peut être du type passif (ne nécessitant pas d'alimentation propre), semi-actif (si une partie de son circuit est alimentée) ou actif (si alimenté en totalité).

Dans la suite, on considère que le transpondeur est de type passif. Dans ce contexte, le transpondeur, qui ne dispose pas d'une alimentation propre, est alimenté par couplage, via le champ électromagnétique du terminal dans lequel il se trouve immergé. Une bonne communication entre les deux dispositifs suppose une distance courte entre eux et une bonne orientation de leurs antennes NFC.

Ces deux conditions peuvent être difficiles à remplir lorsque l'utilisateur ne distingue pas bien le transpondeur vers lequel il doit se diriger. En particulier, dans un environnement multi-transpondeurs, par exemple sur un support d'affichage dans un lieu public, plusieurs transpondeurs correspondant à des applications différentes peuvent être très proches les uns des autres. Il est difficile, dans ce cas, de repérer précisément un transpondeur parmi plusieurs si son affichage ne le fait pas ressortir visuellement.

A cet effet, il a été proposé d'associer au transpondeur une signalétique spécifique, afin d'indiquer à l'utilisateur du terminal son emplacement exact. Par exemple, une technique connue visant à offrir des services NFC dans la ville propose une signalétique simple et reconnaissable, qui permet à l'utilisateur d'un tel service de repérer facilement le transpondeur pour pouvoir en approcher son terminal mobile. Mais cette signalétique reste difficile à repérer si le transpondeur est entouré d'autres transpondeurs de signalétique proche ou si les signalétiques se brouillent mutuellement à cause de la proximité des transpondeurs.

Une difficulté supplémentaire advient lorsque l'utilisateur est malvoyant.

Le document EP 1 043 679 A1 enseigne un procédé de repérage de la position d'un terminal, par exemple une borne, par rapport à un transpondeur, afin de détecter notamment le seuil de distance de la borne conditionnant le fonctionnement du système.

Ce procédé ne permet cependant pas d'indiquer à l'utilisateur du terminal s'il se rapproche correctement de sa cible. Une difficulté supplémentaire persiste lorsque l'utilisateur est malvoyant.

L'invention offre une solution ne présentant pas les inconvénients de l'état de la technique.

### L'invention

A cet effet, selon un aspect fonctionnel, l'invention a pour objet un procédé de repérage de la position d'un terminal par rapport à un transpondeur selon la revendication 1. Ainsi, l'invention offre l'avantage de restituer à l'utilisateur du terminal mobile une indication sur la position de son terminal par rapport au transpondeur cible, qui lui permet de s'approcher au mieux du transpondeur.

Selon un mode de mise en oeuvre particulier du procédé de l'invention, un procédé tel que décrit ci-dessus inclut en outre une étape de numérisation du premier signal pour obtenir le second signal. Ce mode de mise en oeuvre de l'invention permet d'obtenir simplement un signal numérique fonction de l'impédance de charge, exploitable par le microprocesseur du terminal, à la différence du premier signal qui existe déjà dans le terminal mais n'est pas exploité dans un contexte classique de communication entre un terminal et un transpondeur selon l'état de la technique.

Cette mise en oeuvre de l'invention permet à l'utilisateur du terminal mobile de savoir s'il se rapproche ou s'il s'éloigne de la cible, selon le signe de la variation de distance calculée entre les deux instants.

Selon un aspect matériel, l'invention concerne également un terminal selon la revendication 3. Selon un premier mode de mise en oeuvre particulier du terminal selon l'invention, le terminal tel que décrit ci-dessus inclut en outre des moyens de numérisation du premier signal pour obtenir le second signal.

Selon un autre aspect matériel, l'invention concerne également un programme d'ordinateur apte à être mis en oeuvre sur un terminal tel que décrit ci-dessus, le programme comprenant des instructions de code qui, lorsque le programme est exécuté par un processeur, réalise les étapes du procédé défini ci-dessus.

L'invention sera mieux comprise à la lecture de la description qui suit, donnée à titre d'exemple et faite en référence aux dessins annexés.

### Les figures:

La figure 1 représente schématiquement un terminal et plusieurs transpondeurs selon l'état de la technique.
La figure 2 est un schéma bloc représentant le couplage du terminal de la figure 1 avec un transpondeur.
La figure 3 est un schéma synoptique illustrant l'architecture générale du terminal selon l'invention.
La figure 4 représente de manière plus détaillée le circuit d'évaluation de la modulation de charge de la figure 3.
La figure 5 est un organigramme illustrant les différentes étapes du procédé dans le terminal selon l'invention.

### Description détaillée d'un exemple de réalisation illustrant l'invention

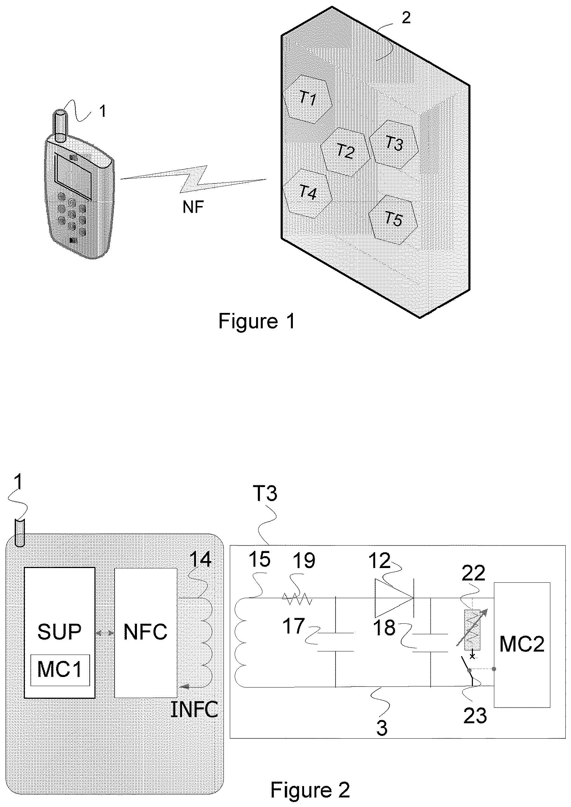

La présente invention est décrite en référence aux figures 1 à 5. Seules les étapes nécessaires à la compréhension de l'invention sont détaillées.

La figure 1 représente un système comprenant un terminal 1 et plusieurs transpondeurs T1-T5 disposés sur un panneau d'affichage 2 ou tout autre type de support.

Le terminal 1 est apte à communiquer en champ proche via un champ électromagnétique NF avec chacun des transpondeurs T1-T5.

Le terminal 1 représenté ici est un téléphone mobile possédant un module NFC, mais peut prendre d'autres formes, par exemple celle d'un lecteur de cartes à puces, d'un ordinateur portable, ou de tout autre dispositif portable apte à communiquer en champ proche avec des transpondeurs.

De même, les transpondeurs représentés ici sont des étiquettes NFC mais peuvent aussi, dans le contexte de l'invention, prendre la forme de cartes à puces sans contact, ou de terminaux mobiles se comportant comme telles.

Le terminal mobile, qui se comporte ici comme un lecteur de cartes sans contact, est apte à entrer en communication avec les transpondeurs lorsque l'utilisateur du terminal mobile s'approche du support 2 sur lequel ils sont disposés. Par exemple, il peut s'agir de la paroi d'un abribus et les étiquettes sont respectivement destinées à donner à un utilisateur du terminal des informations sur une ville (T1) ou un réseau de transport (T2), à recharger un compte de tickets de l'utilisateur en tickets de transport (T3), à calculer un itinéraire (T4), à acheter un produit ou un spectacle chez un marchand (T5).

On suppose ici que l'utilisateur du terminal mobile, souhaitant recharger son compte de tickets de transport, s'intéresse à l'étiquette T3. Lorsque l'utilisateur, ayant repéré le support 2, s'approche des transpondeurs, il les plonge tous, comme il sera détaillé à l'appui de la figure 2, dans le champ électromagnétique NF de son terminal mobile. En réponse, lorsque les transpondeurs sont alimentés, le terminal reçoit des signaux relatifs à l'impédance de charge des transpondeurs, comme il sera également décrit plus tard.

Il est bien connu dans l'état de la technique de gérer des collisions entre plusieurs de ces transpondeurs qui émettraient simultanément des informations en direction du terminal et que celui-ci ne parviendrait pas à différencier. Par exemple, le brevet européen EP0472472 décrit un tel procédé.

Cette étape ne sera donc pas décrite ici, car le problème que l'on se propose de résoudre est de trouver l'étiquette T3, c'est-à-dire de s'en approcher le plus possible, et non de gérer les problèmes, que l'on suppose résolus, de collisions avec les autres transpondeurs.

L'utilisateur du terminal mobile, qui peut être malvoyant, ne peut distinguer avec précision l'étiquette T3 parmi les autres étiquettes. Le but de l'invention est de le guider vers T3 pour établir une bonne communication entre son terminal mobile et l'étiquette T3.

La figure 2 illustre la communication entre un terminal 1 et un transpondeur T3 selon l'état de l'art. Chacun des dispositifs est équipé d'une antenne (14,15). Par analogie, l'ensemble formé du terminal et du transpondeur peut être assimilé à un transformateur dans lequel le terminal joue le rôle du circuit primaire (14, NFC) et le circuit 3 du transpondeur T3 le rôle du secondaire.

Le terminal comporte schématiquement une électronique de commande pour les communications en champ proche, ou module NFC et un module de supervision SUP, comprenant un microprocesseur MC1, qui gère les échanges avec l'étiquette T3.

Un courant électrique dans le circuit primaire du terminal 1 génère un champ électromagnétique au niveau de l'antenne. Par induction électromagnétique, un courant électrique est généré dans le circuit 3 du secondaire dès que celui-ci se trouve plongé dans le champ proche. Ce courant du secondaire est redressé par la diode 12 et peut alors alimenter un microprocesseur MC2 du transpondeur. L'antenne 15, sa résistance intrinsèque 19, les capacités 17 et 18, forment un circuit RLC oscillant accordé à la fréquence d'oscillation du primaire.

Ainsi le terminal communique-t-il avec le transpondeur par une simple modulation d'amplitude à ses bornes.

Pour communiquer avec le terminal, dans notre exemple, le transpondeur T3 fait pour sa part varier sa consommation de puissance électrique, induisant ainsi une variation du courant électrique dans le primaire, via l'antenne du terminal 14. Ainsi, le circuit 3 du secondaire représente-t-il, vu du primaire, une charge d'impédance variable. Tout se passe comme si cette charge, représentée sur la figure par l'impédance variable 22, était positionnée par le microprocesseur MC2 du transpondeur T3 en parallèle sur le circuit 3 du secondaire.

Si le microprocesseur MC2 du transpondeur T3 fait varier cette impédance de charge 22 par le biais d'un interrupteur 23, la consommation de puissance du secondaire change, ce qui se traduit par une variation du courant induit INFC qui peut être mesurée au niveau du primaire. C'est ce qu'on appelle la modulation de charge. Ainsi le transpondeur peut-il, par ce procédé, établir une communication avec le terminal : une variation du courant au niveau du transpondeur génère une variation du courant dans le primaire ; notamment, un pic d'intensité au primaire peut être assimilé à la réception d'un symbole binaire.

Les dispositifs actuels, qui mettent en oeuvre cette technique de modulation de charge, s'attachent aux variations significatives de la charge provoquée par le transpondeur, ou charge rapportée, c'est-à-dire aux variations qui dépassent un certain seuil, mais ne s'intéressent pas au taux de la modulation de charge. Par exemple, un symbole binaire 0 sera détecté si le courant induit au terminal par la variation de charge est supérieur à un courant INFC₀ (par exemple, INFC₀=10 mA) et un symbole binaire 1 sera détecté si le courant induit est supérieur à un courant INFC₁ (par exemple INFC₁ = 10xINFC₀ = 100 mA). Mais les variations fines du courant induit INFC autour de ces deux seuils ne sont pas exploitées.

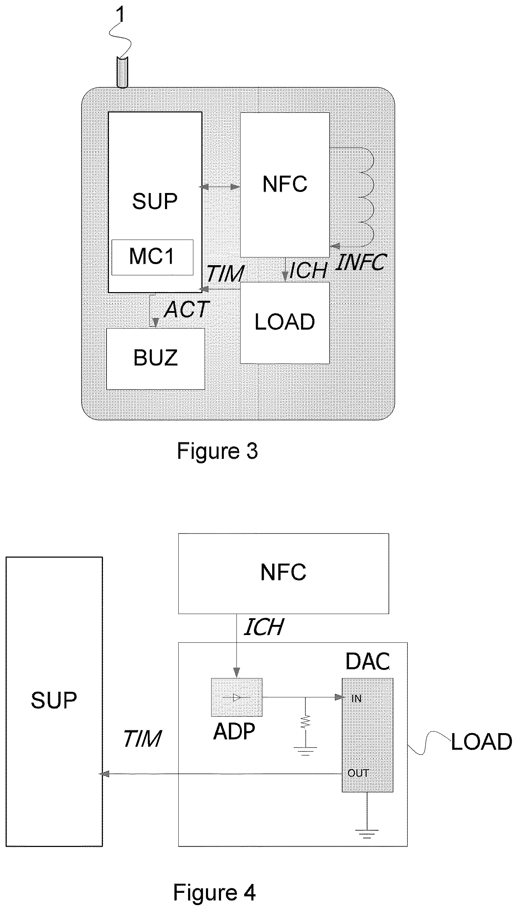

La figure 3 représente un terminal selon l'invention. Ce terminal comporte, en plus des modules NFC et SUP de la figure 2, des moyens de mesure de l'impédance de charge rapportée illustrés par un circuit LOAD et connectés, électriquement dans notre exemple, au module NFC et au module superviseur SUP. Le module NFC fournit au circuit LOAD un courant ICH fonction de l'impédance de charge rapportée. Ce courant de charge ICH peut être par exemple égal au courant de charge rapportée dans le primaire, INFC. Il peut encore être directement proportionnel à la valeur de l'impédance de charge rapportée. Le circuit LOAD fournit en sortie un signal MIR de Mesure de l'Impédance Rapportée.

Le terminal selon l'invention comporte également dans cet exemple de réalisation un circuit BUZ de pilotage d'un buzzer de fréquence sonore variable qui peut être actionné via un signal ACT délivré par le microprocesseur MC1 du module SUP. Le superviseur SUP alimente le buzzer avec des créneaux de tension d'amplitude constante dont la période varie suivant la fréquence sonore que l'on souhaite générer. Dans d'autres exemples de réalisation, le buzzer pourrait être remplacé par tout autre dispositif apte à émettre une indication pour l'utilisateur du terminal mobile, par exemple un vibreur, un signal lumineux, etc.

Le principe de fonctionnement du terminal selon l'invention est le suivant : si la distance diminue (respectivement augmente) entre le terminal 1 et le transpondeur T3, l'impédance de charge rapportée dans le terminal augmente (respectivement diminue). Une mesure par le circuit LOAD du courant de charge ICH (fonction du courant INFC) rapporté dans le terminal permet donc d'évaluer les variations de la distance relative entre les deux dispositifs. Une information MIR fonction du courant ICH d'entrée dans le circuit LOAD est transmise au superviseur SUP qui est apte à déterminer une variation de distance et communiquer un ordre d'action ACT au module BUZ. Par exemple, si l'impédance de charge rapportée augmente, traduisant un rapprochement du transpondeur, le superviseur SUP raccourcit la période des créneaux de tension aux bornes du buzzer pour augmenter le rythme de sa sonnerie. Si au contraire, l'impédance rapportée diminue, le superviseur SUP augmente cette période pour diminuer le rythme de la sonnerie.

Le circuit LOAD dédié à la mesure de l'impédance de charge rapportée lors du couplage est détaillé en figure 4. Le circuit LOAD est relié à l'électronique de contrôle du module NFC, duquel il reçoit un courant de charge ICH dont l'intensité est fonction du courant INFC et donc de l'impédance de charge rapportée. Le circuit LOAD est également connecté au module SUP auquel il fournit une information MIR relative à l'impédance de charge rapportée. Le courant ICH en provenance du module NFC traverse un adaptateur ADP afin d'être transformé en une tension qui est appliquée sur la broche d'entrée IN du circuit CAN (Convertisseur Analogique-Numérique) du module LOAD. Cette tension, qui est donc une fonction de l'impédance de charge rapportée, est numérisée par le Convertisseur Analogique-Numérique CAN qui la transpose en une Mesure de l'Impédance Rapportée (MIR). Si la tension croît sur la broche IN du CAN, cela signifie que le terminal s'est rapproché du transpondeur et MIR augmente ; si la tension diminue, il s'en est éloigné et MIR diminue. Cette information d'éloignement ou de rapprochement est transmise au superviseur SUP qui va pouvoir, comme détaillé auparavant, déclencher une action adéquate, par exemple faire augmenter ou diminuer le rythme sonore du buzzer BUZ de la figure 3.

Naturellement, ce circuit LOAD est donné à titre d'exemple. Il pourrait être remplacé par tout autre circuit apte à fournir au superviseur SUP une information relative à l'impédance de charge rapportée.

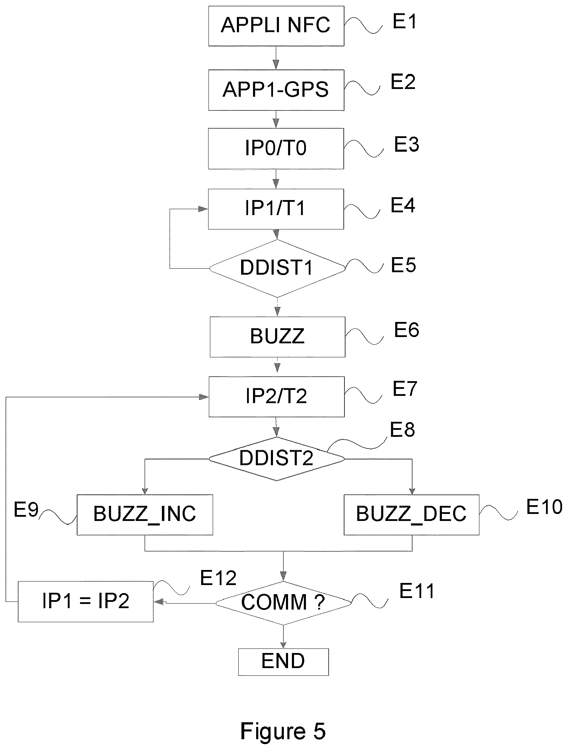

La figure 5 décrit les différentes étapes de l'invention exécutées sur le terminal de la figure 3.

Lors d'une étape E1, l'utilisateur du terminal mobile signifie à son terminal une description du service NFC visé. Par exemple, il sélectionne le service dans une liste, ou encore selon un autre exemple, il saisit sur le clavier de son terminal un identifiant du service. Il peut s'agir de recharger ses tickets de transport et l'identifiant est alors le nom ou une référence du service de transport.

Lors d'une étape E2, une application de guidage de haut niveau, typiquement de type GPS, indique au terminal la position de sa cible, afin que l'utilisateur du terminal puisse se déplacer vers l'étiquette NFC la plus proche qui correspond à la catégorie d'application NFC (de rechargement des tickets de transport) visée. Le système GPS comporte des satellites émetteurs qui permettent au récepteur GPS du terminal de calculer sa position par détermination de sa distance à plusieurs de ces satellites. Il est bien connu d'utiliser un tel système pour indiquer au terminal une route à suivre vers une cible (station-service, magasin, abribus, etc.) Cette première étape d'approche guidée ne sera donc pas décrite davantage. Le système GPS présente une précision limitée. A l'issue de cette étape E2, l'utilisateur se trouve donc dans le voisinage (typiquement à moins d'un mètre) de son étiquette. Le but des étapes suivantes est de le guider de manière plus fine vers cette étiquette.

Dans toute la suite de cet exemple de réalisation, l'utilisateur du terminal mobile tente de se rapproche de sa cible, c'est-à-dire du support sur lequel se trouvent disposés les transpondeurs.

Lors d'une étape E3, une première indication de positionnement IP0 est calculée par le circuit LOAD et le superviseur SUP de la figure 3. La mesure de l'impédance de charge rapportée dans le terminal permet d'établir une première indication de positionnement IP0 fonction du signal MIRO de sortie du circuit LOAD à cet instant T0. Si les transpondeurs sont encore très éloignés du terminal mobile, l'impédance de charge rapportée est nulle donc le courant induit INFC0 est nul, le signal MIRO est nul et l'indication de positionnement IP0 calculée par le superviseur peut être nulle.

Une indication de positionnement IP1 est calculée à partir d'un signal MIR1 à l'instant T1 lors de l'étape E4 similaire à l'étape E3. Si le terminal a bougé, cette indication de positionnement IP1 peut être différente de l'indication de positionnement IP0. Notamment, si l'utilisateur du terminal mobile s'est rapproché de sa cible, son terminal alimente maintenant l'étiquette cible et éventuellement une ou plusieurs autres étiquettes disposées par exemple sur le support d'étiquettes 2 de la figure 1, en les immergeant dans son champ électromagnétique NF. L'impédance de charge rapportée n'est plus nulle et l'indication de positionnement IP1 devient positive.

Une première différence DDIST1 = (IP1 - IP0) est calculée à l'étape E5 suivante par le superviseur SUP. Si cette évaluation d'une différence de distance DDIST1 est positive, c'est-à-dire si le terminal s'est rapproché de son étiquette, alors le buzzer BUZ est activé par le superviseur SUP lors d'une étape E6. Typiquement, lors de cette étape, le buzzer sera actionné pour fournir un rythme sonore lent. Si, en revanche, la différence DDIST1 est nulle, cela signifie que l'impédance de charge rapportée n'a pas varié, et l'étape E4 est décrite de nouveau pour mesurer une nouvelle indication de positionnement IP1.

Lors de l'étape E7, une troisième évaluation d'indication de positionnement IP2 est effectuée par le circuit LOAD et le superviseur SUP de la figure 3. La mesure de l'impédance de charge rapportée permet d'établir cette indication IP2 fonction du signal MIR2 de sortie du circuit LOAD à cet instant T2.

Lors de l'étape E8 similaire à l'étape E5, une seconde différence DDIST2 = (IP2 - IP1) est calculée. Si cette différence DDIST2 est positive, c'est-à-dire si le terminal s'est rapproché de son étiquette, alors le rythme sonore du buzzer BUZ est augmenté par le superviseur SUP lors d'une étape E9, dans le cas contraire il est diminué lors d'une étape E10.

L'étape E11 permet de valider l'établissement de la communication entre le terminal et le transpondeur. Pendant l'étape E11, le terminal respecte le protocole habituellement mis en place lors des communications NFC, qui est bien connu et ne sera donc pas décrit ici. Dès que le terminal réussit à entrer en communication avec le transpondeur T3, selon notre exemple, dont il a reçu la description à l'étape E1, le test de l'étape E11 devient positif et le processus de guidage s'arrête (END). Si, en revanche, le test de l'étape E11 est négatif, l'indication de positionnement IP2 devient la nouvelle distance de référence (IP1=IP2) au cours d'une étape E12 et une nouvelle indication de positionnement IP2 est calculée par un retour à l'étape E7.

Ainsi, les étapes E7 à E12 sont répétées jusqu'à ce que l'utilisateur du terminal mobile, guidé par les variations du rythme sonore du buzzer, ait suffisamment approché son terminal du transpondeur cible T3 pour établir avec lui une bonne communication, entraînant ainsi le succès du test de l'étape E11 et la fin du procédé (END).

Naturellement, le rythme sonore du buzzer n'est qu'un paramètre donné à titre d'exemple. Le procédé de guidage fin décrit dans les étapes E6 à E12 peut être basé sur une augmentation du volume du signal sonore du buzzer. Alternativement, le buzzer peut être remplacé par un signal lumineux fixe ou clignotant, un vibreur, une voix, ou tout autre moyen apte à signifier à l'utilisateur du terminal qu'il se rapproche ou s'éloigne de sa cible.

## Revendications

1. Procédé de repérage de la position d'un terminal (NFC, RFID) (1) par rapport à un transpondeur (T3) équipé d'un circuit présentant une impédance de charge, ledit terminal étant apte à recevoir des signaux du transpondeur comportant:
- une étape de réception par le terminal d'un premier signal (INFC) relatif à l'impédance de charge (22) du transpondeur (T3) ;
- une étape d'obtention d'un second signal (MIR) à partir du premier signal (INFC) ;
**caractérisé en ce qu'**il comporte en outre :
- une étape de détermination d'une variation de distance (DDIST) entre le terminal et le transpondeur, calculée selon les étapes suivantes :
- une première étape de mesure d'une indication de positionnement du terminal (IP1) par rapport au transpondeur (T3), à un premier instant (T1), basée sur l'analyse du second signal (MIR) audit premier instant (T1) ;
- une deuxième étape de mesure d'une indication de positionnement du terminal (IP2) par rapport au transpondeur (T3), à un second instant (T2), basée sur l'analyse du second signal (MIR) audit second instant (T2) ;
- une étape d'évaluation d'une variation de distance (DDIST) à partir de la première mesure (IP1) et de la seconde mesure (IP2) ;
- une étape de restitution d'un troisième signal (ACT) fonction de la variation de distance évaluée, apte à signifier à un utilisateur du terminal un rapprochement ou un éloignement du transpondeur.

2. Procédé selon la revendication 1 **caractérisé en ce que** l'étape d'obtention comporte une étape de numérisation du premier signal (INFC) pour obtenir le second signal (MIR).

3. Terminal (1) équipé d'un dispositif de communication en champ proche (RFID, NFC) apte à recevoir des signaux d'un transpondeur (T3) équipé d'un circuit présentant une impédance de charge, comprenant :
- Des moyens de réception (NFC) par le terminal d'un premier signal (INFC) relatif à l'impédance de charge (22) du transpondeur (T3);
- Des moyens d'obtention (LOAD) d'un second signal (MIR) à partir du premier signal (INFC) ;
**caractérisé en ce qu'**il comporte en outre :
- Des moyens de détermination (SUP, MC1) d'une variation de distance (DDIST) entre le terminal et le transpondeur, calculée à partir
- d'une première mesure d'une indication de positionnement du terminal (IP1) par rapport au transpondeur (T3), à un premier instant (T1), basée sur l'analyse du second signal (MIR) audit premier instant (T1),
- et d'une seconde mesure d'une indication de positionnement du terminal (IP2) par rapport au transpondeur (T3), à un second instant (T2), basée sur l'analyse du second signal (MIR) audit second instant (T2)
- Des moyens de restitution (SUP, MC1) d'un troisième signal (ACT) fonction de la variation de distance déterminée, apte à signifier à un utilisateur du terminal un rapprochement ou un éloignement du transpondeur.

4. Terminal selon la revendication 3 **caractérisé en ce qu'**il comporte des moyens de numérisation (LOAD) du premier signal (INFC) pour obtenir le second signal (MIR).

5. Programme d'ordinateur apte à être mis en oeuvre sur un terminal tel que défini dans la revendication 3, le programme comprenant des instructions de code qui, lorsque le programme est exécuté par un processeur, réalise les étapes du procédé défini selon l'une des revendications 1 à 2.

## Patentansprüche

1. Verfahren zur Erfassung der Position eines Endgerätes (NFC, RFID) (1) bezüglich eines Transponders (T3), der mit einer Schaltung ausgestattet ist, die eine Lastimpedanz aufweist, wobei das Endgerät geeignet ist, Signale des Transponders zu empfangen, umfassend:
- einen Schritt des Empfangs, durch das Endgerät, eines ersten Signals (INFC), das sich auf die Lastimpedanz (22) des Transponders (T3) bezieht;
- einen Schritt der Gewinnung eines zweiten Signals (MIR) aus dem ersten Signal (INFC);
**dadurch gekennzeichnet, dass** es außerdem umfasst:
- einen Schritt der Bestimmung einer Änderung des Abstands (DDIST) zwischen dem Endgerät und dem Transponder, die gemäß den folgenden Schritten berechnet wird:
- einem ersten Schritt der Messung eines Indikators der Positionierung des Endgerätes (IP1) bezüglich des Transponders (T3) zu einem ersten Zeitpunkt (T1) basierend auf der Analyse des zweiten Signals (MIR) zu dem ersten Zeitpunkt (T1);
- einem zweiten Schritt der Messung eines Indikators der Positionierung des Endgerätes (IP2) bezüglich des Transponders (T3) zu einem zweiten Zeitpunkt (T2) basierend auf der Analyse des zweiten Signals (MIR) zu dem zweiten Zeitpunkt (T2);
- einem Schritt der Ermittlung einer Abstandsänderung (DDIST) aus der ersten Messung (IP1) und der zweiten Messung (IP2);
- einen Schritt der Wiedergabe eines von der ermittelten Abstandsänderung abhängigen dritten Signals (ACT), das geeignet ist, einen Benutzer des Endgerätes darüber zu informieren, dass sich der Transponder nähert oder entfernt.

2. Verfahren nach Anspruch 1, **dadurch gekennzeichnet, dass** der Schritt der Gewinnung einen Schritt der Digitalisierung des ersten Signals (INFC), um das zweite Signal (MIR) zu gewinnen, umfasst.

3. Endgerät (1), das mit einer Nahfeldkommunikationsvorrichtung (RFID, NFC) ausgestattet ist, die geeignet ist, Signale eines Transponders (T3) zu empfangen, der mit einer Schaltung ausgestattet ist, die eine Lastimpedanz aufweist, umfassend:
- Mittel zum Empfang (NFC), durch das Endgerät, eines ersten Signals (INFC), das sich auf die Lastimpedanz (22) des Transponders (T3) bezieht;
- Mittel zur Gewinnung (LOAD) eines zweiten Signals (MIR) aus dem ersten Signal (INFC);
**dadurch gekennzeichnet, dass** es außerdem umfasst:
- Mittel zur Bestimmung (SUP, MC1) einer Änderung des Abstands (DDIST) zwischen dem Endgerät und dem Transponder, die aus einer ersten Messung eines Indikators der Positionierung des Endgerätes (IP1) bezüglich des Transponders (T3) zu einem ersten Zeitpunkt (T1) basierend auf der Analyse des zweiten Signals (MIR) zu dem ersten Zeitpunkt (T1) und aus einer zweiten Messung eines Indikators der Positionierung des Endgerätes (IP2) bezüglich des Transponders (T3) zu einem zweiten Zeitpunkt (T2) basierend auf der Analyse des zweiten Signals (MIR) zu dem zweiten Zeitpunkt (T2) berechnet wird,
- Mittel zur Wiedergabe (SUP, MC1) eines von der bestimmten Abstandsänderung abhängigen dritten Signals (ACT), das geeignet ist, einen Benutzer des Endgerätes darüber zu informieren, dass sich der Transponder nähert oder entfernt.

4. Endgerät nach Anspruch 3, **dadurch gekennzeichnet, dass** es Mittel zur Digitalisierung (LOAD) des ersten Signals (INFC), um das zweite Signal (MIR) zu gewinnen, umfasst.

5. Computerprogramm, das geeignet ist, auf einem Endgerät, wie in Anspruch 3 definiert, ausgeführt zu werden, wobei das Programm Codeanweisungen umfasst, welche, wenn das Programm von einem Prozessor ausgeführt wird, die Schritte des nach einem der Ansprüche 1 bis 2 definierten Verfahrens realisiert.

## Claims

1. Method of tagging the positon of a terminal (NFC, RFID) (1) with respect to a transponder (T3) equipped with a circuit exhibiting a load impedance, said terminal being able to receive signals from the transponder comprising :
- a step of receiving by the terminal a first signal (INFC) relating to the load impedance (22) with the transponder (T3);
- a step of obtaining a second signal (MIR) on the basis of the first signal (INFC);
**characterized in that** it furthermore comprises:
- a step of determining a variation in distance (DDIST) between the terminal and the transponder, calculated according to the following steps:
- a first step of measuring an indication of positioning of the terminal (IP1) in respect of the transponder (T3), at a first instant (T1), based on the analysis of the second signal (MIR) at said first instant (T1);
- a second step of measuring an indication of the positioning of the terminal (IP2) in respect of the transponder (T3), at a second instant (T2), based on the analysis of the second signal (MIR) at the said second instant (T2);
- a step of evaluating a variation in distance (DDIST) on the basis of the first measurement (IP1) and of the second measurement (IP2);
- a step of restoring a third signal (ACT) dependent on the variation in distance evaluated, able to signify to a user of the terminal that the transponder is approaching or receding.

2. Method according to Claim 1, **characterized in that** the obtaining step comprises a step of digitizing the first signal (INFC) to obtain the second signal (MIR).

3. Terminal (1) equipped with a near field communication device (RFID, NFC) able to receive signals from a transponder (T3) equipped with a circuit exhibiting a load impedance, comprising:
- means for receiving (NFC) by the terminal a first signal (INFC) relating to the load impedance (22) of the transponder (T3);
- means for obtaining (LOAD) a second signal (MIR) on the basis of the first signal (INFC);
**characterized in that** it furthermore comprises:
- means for determining (SUP, MC1) a variation in distance (DDIST) between the terminal and the transponder, calculated on the basis of a first measurement of an indication of positioning of the terminal (IP1) with respect to the transponder (T3), at a first instant (T1), based on the analysis of the second signal (MIR) at the said first instant (T1), and of a second measurement of an indication of positioning of the terminal (IP2) with respect to the transponder (T3), at a second instant (T2), based on the analysis of the second signal (MIR) at the said second instant (T2)
- means of restoring (SUP, MC1) a third signal (ACT) dependent on the variation in distance determined;
able to signify to a user of the terminal that the transponder is approaching or receding.

4. Terminal according to Claim 3, **characterized in that** it comprises means (LOAD) for digitizing the first signal (INFC) to obtain the second signal (MIR).

5. Computer program able to be implemented on a terminal such as defined in Claim 3, the program comprising code instructions which, when the program is executed by a processor, carries out the steps of the method defined according to one of Claims 1 and 2.
